# FASCICULE DE BREVET EUROPEEN

(11) **EP 2 044 413 B1**
(45) Date de publication et mention de la délivrance du brevet: **13.12.2017**
(21) Numéro de dépôt: 07787292.7
(22) Date de dépôt: 10.07.2007
(51) Int. Cl.: G01N 3/307, G01M 7/08

(54) **DISPOSITIF POUR GÉNÉRER DES IMPACTS SUR UNE STRUCTURE**
VORRICHTUNG ZUR ERZEUGUNG VON EINSCHLÄGEN MIT EINER STRUKTUR
DEVICE FOR GENERATING IMPACTS WITH A STRUCTURE

(30) Priorité: 10.07.2006 FR 0652888
(43) Date de publication de la demande: 08.04.2009
(73) Titulaire: Airbus Safran Launchers SAS, 92130 Issy-les-Moulineaux (FR)
(72) Inventeur: PERRIER, Aurélien, F-92220 Bagneux (FR); LE FLOC'H, Gilbert, F-33290 Parempuyre (FR)
(74) Mandataire: Ipside
(86) Numéro de dépôt international: PCT/EP2007/057017
(87) Numéro de publication internationale: WO 2008/006822

(56) Documents cités:
- EP-A- 1 553 393
- DE-A1- 3 128 711
- DE-A1- 10 009 987
- GB-A- 2 379 276
- US-A- 5 184 499

## Description

La présente invention concerne un dispositif pour générer des impacts sur une structure, notamment à basse énergie à des fins de contrôle.

Les structures réalisées en matériaux composites sont mises en oeuvre de plus en plus fréquemment en milieu industriel, en particulier dans les industries de pointe telles que l'aéronautique et l'aérospatiale mais aussi dans la fabrication de composants de série pour les véhicules automobiles, les bateaux, les trains ...

Ces matériaux présentent en effet d'excellentes propriétés mécaniques tant statiques que dynamiques pour une faible densité.

Toutefois, les structures réalisées à partir de ces matériaux sont particulièrement sensibles aux chocs directs, ou impacts, lesquels peuvent produire des dommages, voire des perforations. Ces chocs peuvent donc altérer sensiblement les caractéristiques mécaniques de ces structures et les empêcher de remplir leur fonction.

Jusqu'à présent, les matériaux composites ont surtout été mis en oeuvre pour des pièces non structurales, comme des capots aérodynamiques, ou pour des pièces structurales situées dans des zones "protégées", ces pièces étant peu susceptibles d'être soumises aux aléas de leur environnement.

Mais aujourd'hui, on cherche à utiliser ces matériaux composites pour la construction de fuselages ou d'ailes d'avion, de bogies de train,... afin d'améliorer les performances de ces moyens de transport. Ces pièces en matériaux composites seront donc particulièrement exposées à des chocs directs.

Il convient dès lors d'évaluer les risques liés à ces chocs mécaniques que pourraient subir ces pièces pour connaître le comportement de ces dernières et déterminer si elles peuvent encore fonctionner de façon nominale malgré la présence d'un ou plusieurs impacts.

Le but de l'invention est une machine permettant de générer des chocs directs et représentatifs sur une pièce à l'échelle réelle. Le choc peut alors se trouver en n'importe quel emplacement de la pièce, par exemple sur le dessus ou sur les côtés.

Plus précisément, l'invention s'intéresse à la génération de chocs dits "basse énergie" qui concerne les petits chocs de la vie courante, tels que ceux engendrés par la chute d'un outil : les vitesses sont alors de l'ordre de quelques mètres par seconde.

On connaît par la demande de brevet US 2005/0188744, une machine permettant de générer des chocs sur des pièces mécaniques.

Cette machine comporte un impacteur et une source d'énergie pneumatique comportant un cylindre pneumatique pour mettre en mouvement cet impacteur. L'impacteur comporte une tête de mesure laser, un système anti rebond constitué par un simple ressort de rappel et un absorbeur d'énergie résiduelle.

Cependant, cette machine présente plusieurs inconvénients.

La source d'énergie étant pneumatique, il est nécessaire de s'assurer de l'étanchéité des pièces en mouvement. Il existe par conséquent des frottements et, par là, une consommation de l'énergie de l'impacteur qui n'est pas connue au cours de la phase dite "balistique" de celui-ci.

Une telle installation est, en outre, très complexe et peut poser des problèmes de fiabilité et surtout, de reproductibilité des essais.

Le système de mesure de l'énergie du choc est constitué par un laser embarqué. Or, il est bien connu que la précision des mesures de vitesse par laser n'est pas très bonne et que l'obtention d'une mesure significative nécessite une moyenne sur plusieurs mesures.

Il est de plus inadapté d'embarquer un système de mesure sur une pièce soumise à des chocs, et ce système de mesure ne permet pas de déterminer l'énergie de rebond. Il est donc difficile de déterminer les efforts
lors de l'impact. Enfin, il existe des risques de santé pour les opérateurs liés à la présence du faisceau laser.

Le système anti-rebond est, comme indiqué plus haut, constitué par un simple ressort de rappel. Or par définition, un tel ressort est consommateur de l'énergie balistique transmise à l'impacteur. Cette consommation d'énergie étant dépendante de la course de l'impacteur, le réglage des paramètres d'essai est particulièrement complexe.

La machine décrite ne comporte enfin pas de bâti, ce qui implique un système de sécurité extrêmement complexe, pneumatique aussi, lequel est sujet à une éventuelle erreur humaine. Il n'est donc pas possible d'assurer de manière certaine la sécurité des opérateurs.

On connaît également dans l'état de la technique la demande de brevet britannique N° GB 2 379 276, qui décrit un appareil de test de matériel par impact comportant un chariot support d'impact engagé sur des rails de guidage. De préférence, il comporte deux rails de guidage parallèles et espacés latéralement l'un de l'autre en s'étendant longitudinalement le long de l'appareil. Le chariot support d'impact comporte un corps de masse prédéterminée de manière à créer une force d'impact et des moyens de mesure de force (transducteur) ou un accéléromètre. Ce chariot support d'impact est déplacé seulement par un chariot d'entraînement entraîné par un moteur linéaire.

On connaît également dans l'état de la technique les documents suivants : EP 1 553 393, DE 31 28 711, US 5 184 499 et DE 100 09 987, qui font partie de l'arrière-plan technologique de la présente invention.

L'objectif de la présente invention est donc de proposer un dispositif pour générer des impacts sur une structure, simple dans sa conception et dans son mode opératoire, particulièrement fiable et sécurisé permettant de générer des impacts dans une large gamme d'énergies. Ces impacts peuvent de plus être appliqués sous n'importe quel angle d'incidence.

Un autre objet de la présente invention est un tel dispositif équipé de capteurs reliés à une unité de traitement et permettant de déterminer la vitesse et l'énergie en fonction du temps de la tête d'impact et de connaître les efforts au moment du choc de ladite tête et de la structure pour comprendre les mécanismes et les conséquences de l'endommagement des matériaux composites dont les connaissances sont encore très incomplètes.

A cet effet, l'invention concerne un dispositif pour générer des impacts sur une structure, ce dispositif comportant une tête projectile.

Selon l'invention,
- ladite tête comporte un corps principal sur lequel est monté en saillie un élément d'impact,
- le dispositif comprend un élément propulseur mécanique pour mettre en mouvement la tête projectile,
- l'élément propulseur mécanique étant susceptible de se déplacer entre une première position dite de repos où cet élément propulseur mécanique étant immobile, la tête projectile est plaquée contre celui-ci par au moins un élément de retenue, et une deuxième position où cet élément propulseur mécanique venant en butée contre des éléments de butée, la tête projectile se déplace en translation vers la structure en étant guidée par des éléments de guidage,
- le dispositif comprend de plus un système anti-rebond pour empêcher tout rebond de la tête projectile après impact sur la structure.

Le dispositif pour générer des impacts a avantageusement été réalisé pour constituer un tout intégré, au sens que la tête projectile ne peut pas mécaniquement se désolidariser du bâti du dispositif. Il est donc sans danger pour les opérateurs. De plus, le dispositif utilise une énergie mécanique pour mettre en mouvement l'élément projectile, laquelle est parfaitement déterminée et peut être facilement incrémentée par un pas de valeur connu. Enfin, les instruments de mesure sont placés en zone non mobile du dispositif.

Ces instruments de mesure sont mis en oeuvre de manière avantageuse non seulement pour contrôler les conditions d'essai, mais également pour aider à interpréter les résultats obtenus.

Dans différents modes de réalisation particuliers de ce dispositif pour générer des impacts, chacun ayant ses avantages particuliers et susceptibles de nombreuses combinaisons techniques possibles:
- l'élément propulseur mécanique comprend au moins deux ressorts de compression, le dispositif comprenant un organe pour mettre en tension ces ressorts,
- le système anti-rebond comporte au moins deux vérins recevant en appui le corps principal de la tête projectile de part et d'autre de l'élément d'impact,
- ces vérins sont des vérins pneumatiques,
- le dispositif comporte au moins un capteur de déplacement,

De préférence, ce capteur est un capteur de déplacement capactif.
- le dispositif est apte à projeter la tête projectile sur la structure avec une énergie d'impact inférieure ou égale à 200 Joules +/- 2,5%,
- la vitesse v de la tête projectile est inférieure ou égale à 5 m.s⁻¹.

L'invention sera décrite plus en détail en référence aux dessins annexés dans lesquels:
- la figure 1 représente schématiquement un dispositif pour générer des impacts sur une structure avant largage de la tête projectile selon un mode de réalisation particulier de l'invention;

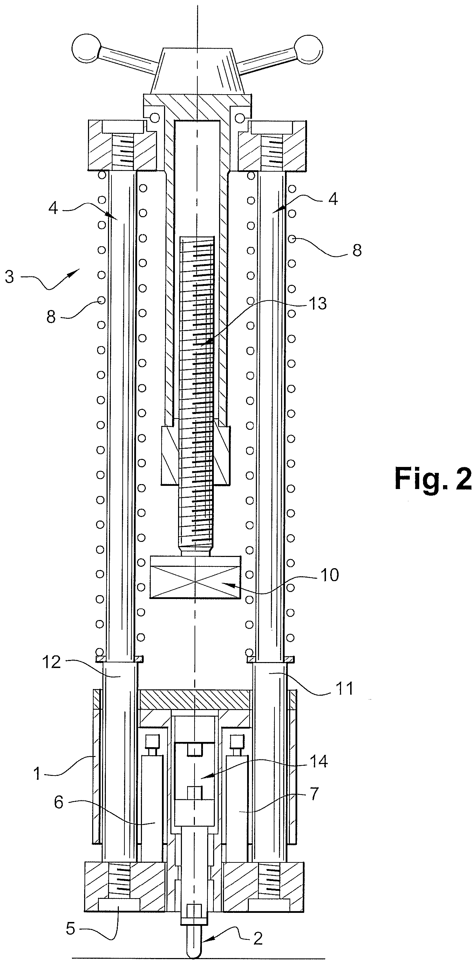

- la figure 2 est une représentation schématique du dispositif de la Figure 1 après largage de la tête projectile;

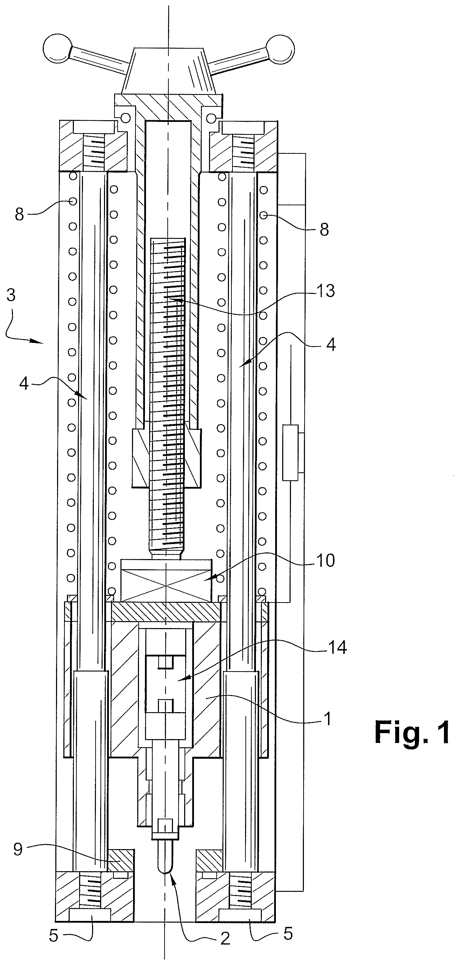

La Figure 1 montre un dispositif pour générer des impacts sur une structure selon un mode de réalisation particulier de l'invention. Ce dispositif comprend une tête projectile comportant un corps principal 1 sur lequel est monté en saillie et de manière amovible un élément d'impact 2. Cet élément d'impact 2 est ainsi interchangeable et peut prendre une forme choisie dans le groupe comprenant une forme hémisphérique, une forme cylindrique, une forme conique ou autre.

Le diamètre de cet élément d'impact 2 est typiquement compris entre quelques millimètres et plusieurs dizaines de millimètres. Il est de préférence métallique mais peut également être réalisé en plastique dur ou autre en fonction de la simulation d'impact à réaliser.

Pour la simulation de chocs à basse énergie, l'énergie d'impact, ou énergie de pression exprimée en Joule appliquée sur la structure, sera typiquement inférieure ou égale à 200 Joules. La vitesse de la tête projectile sera pour sa part inférieure à 5 m/s pour représenter convenablement un choc à basse énergie.

On obtient des énergies d'impact inférieures soit en diminuant la vitesse à masse de la tête projectile constante, laquelle constitue une approche préférée, soit en diminuant la masse de la tête projectile à vitesse d'impact constante, soit en faisant varier les deux simultanément.

Dans le cas où la masse de la tête projectile est variée, le corps principal 1 de la tête projectile peut comporter des points de fixation de charges supplémentaires permettant de changer la masse de cette tête projectile avec son élément d'impact.

Le dispositif comprend un bâti 3 comportant des éléments de guidage 4 montés sur des embases 5, ces éléments de guidage 4 définissant une zone libre pour le passage de l'élément d'impact 2. Un système anti-rebond 6, 7 est placé entre la zone libre et les éléments de guidage 4 dans la partie inférieure du bâti 3 tandis que dans sa partie supérieure, le bâti est relié à un élément propulseur mécanique 8.

Ces éléments de guidage 4 sont des colonnes le long desquelles la tête projectile est mobile. Les embases 5 comportent de préférence des butées de sécurité 9, par exemple en caoutchouc, dont le rôle est de limiter la course de l'élément d'impact 2 en cas de disfonctionnement du dispositif, sans endommager celui-ci et sans que ce disfonctionnement puisse constituer un danger pour les opérateurs. L'ensemble embases/colonnes forme ainsi les limites mécaniques du dispositif.

L'élément propulseur mécanique 8 permet de mettre en mouvement la tête projectile. Il est apte à se déplacer entre une première position dite de repos où cet élément propulseur mécanique 8 étant immobile et situé dans la partie supérieure du bâti 3, la tête projectile est plaquée contre celui-ci par un élément de retenue 10, et une deuxième position où cet élément propulseur mécanique 8 venant en butée contre des éléments de butée 11, 12 la tête projectile se déplace en translation vers la structure en étant guidée par les éléments de guidage 4.

Avant essai, la tête projectile est ainsi maintenue en position par l'élément de retenue 10 qui de préférence est un électro-aimant. Un système mécanique de type "axe", ou un "doigt", peut être mis en oeuvre pour assurer la sécurité de cette fixation. Une double sécurité électrique est par ailleurs assurée par une batterie de secours autonome. Cette batterie de secours est placée sur un circuit auxiliaire permettant d'alimenter en énergie l'élément de retenue 10 en cas de disfonctionnement de la source d'alimentation principale de celui-ci. Cet élément de retenue 10 est avantageusement alimenté par le secteur.

Un boîtier de commande déporté (non représenté) permet à l'opérateur d'activer ou désactiver l'élément de retenue 10 pour larguer ou non la tête projectile avec son élément d'impact.

L'élément propulseur mécanique 8 comprend de préférence deux ressorts de compression mis en tension par une vis 13.

Ces ressorts présentant une extrémité mobile le long des éléments de guidage 4, les éléments de butée 11, 12 sont constitués par un épaulement placé sur chaque colonne 4. Ces épaulements 11, 12 sont aptes à stopper le mouvement des ressorts de compression, la tête projectile se déplaçant alors seule vers la structure jusqu'à ce que l'élément d'impact 2 entre en contact avec cette dernière.

Le système anti-rebond 6, 7 empêche tout rebond de la tête projectile après impact de l'élément d'impact 2 avec la structure. Ce système anti-rebond comporte de préférence deux vérins pneumatiques 6, 7 recevant en appui le corps principal 1 de la tête projectile de part et d'autre de l'élément d'impact 2. Ces vérins 6, 7 sont déclenchés par un capteur tel qu'une cellule photoélectrique qui détecte le passage de la tête projectile prés desdites butées de sécurité 9, au passage montant ou descendant selon l'essai. On peut régler le déclenchement du système anti-rebond au choix à l'aller ou au retour de la tête projectile. Le déclenchement à l'aller permet avantageusement de compenser l'inertie du système anti-rebond. Une mise au point préalable peut éventuellement être nécessaire selon la structure à impacter. En effet, plus la structure est raide et plus le rebond de la tête projectile sera rapide, et plus tôt, il faudra déclencher le système anti-rebond. Le dispositif comporte une source d'alimentation en air comprimé reliée auxdits vérins anti-rebonds 6, 7.

Pour mesurer le déplacement de la tête projectile avant et après impact sur la structure, le dispositif comprend un capteur de déplacement capacitif (non représenté). Ce capteur permet d'accéder par dérivation à la vitesse et à l'énergie en fonction du temps de la tête d'impact.

Un capteur d'effort à jauges de déformation 14 permet de connaître les efforts au moment du choc. Ces capteurs sont de préférence reliés à une unité de traitement central permettant de stocker et de traiter les données reçues.

Un bras télescopique peut être mis en oeuvre pour déplacer et orienter le dispositif par rapport à la structure à impacter. Il permet ainsi de déterminer l'angle d'impact de l'élément d'impact.
Pour utiliser ce dispositif, les données à prendre en compte sont :
- l'énergie de l'impact,
- le type d'élément d'impact mis en oeuvre,
- la position de l'impact à appliquer,
- la direction de l'impact à appliquer par rapport à la verticale, et
- éventuellement la vitesse de l'élément d'impact.

Par ailleurs, l'utilisation de dispositif nécessite un étalonnage préalable, permettant de connaître l'énergie d'impact en fonction d'une part de la direction de l'impact par rapport à la verticale, d'autre part de l'énergie initiale de la tête projectile, à savoir son énergie cinétique telle que fournie par les ressorts. Cet étalonnage préalable permet de connaître avec précision la raideur des ressorts 8 mis en oeuvre pour propulser la tête projectile. Bien entendu, cet étalonnage n'intervient que dans la première phase de validation du dispositif.

Les conditions de l'essai, et l'étalonnage du dispositif permettent de déterminer la compression à appliquer aux ressorts pour obtenir une énergie d'impact déterminée et pour varier celle-ci avec un pas qui peut être de 1 Joule.

Après avoir positionné le dispositif sur la structure à impacter, on enlève l'axe de sécurité, puis on déclenche l'essai en désactivant l'élément de retenue 10. L'élément propulseur mécanique 8 propulse la tête projectile, qui poursuit sa course de façon inertielle quand l'élément propulseur mécanique 8 est stoppé par les éléments de butée 11, 12.

Le capteur de déplacement capacitif permet de mesurer le déplacement de la tête projectile pendant le déplacement inertiel de celle-ci, avant et après l'impact. Une dérivation du signal permet de connaître la vitesse de la tête projectile, et ainsi l'énergie avant et après impact.

On peut remonter ainsi à l'énergie absorbée pour la structure, ainsi qu'à des caractéristiques matériaux au moment du choc à l'aide du capteur à jauges de déformation 14.

Enfin, le système anti-rebond 6, 7 détecte que l'impact a été réalisé, et empêche la tête projectile de rebondir une nouvelle fois sur la structure afin de s'assurer que la tête projectile ne vienne percuter qu'une seule fois la structure à tester. Comme expliqué plus haut, la tête projectile effectue cependant un rebond sur la structure impactée.

Ce dispositif peut être mis en oeuvre dans tout domaine industriel où les composites structuraux sont utilisés : les transports, mais aussi par exemple l'industrie pétrolière.

## Revendications

1. Dispositif pour générer des impacts sur une structure, ledit dispositif comportant une tête projectile, **caractérisé en ce que**
- ladite tête comporte un corps principal (1) sur lequel est monté en saillie un élément d'impact (2),
- le dispositif comprend un élément propulseur mécanique (8) pour mettre en mouvement ladite tête projectile,
- ledit élément propulseur mécanique (8) étant susceptible de se déplacer entre une première position dite de repos où ledit élément propulseur mécanique (8) étant immobile, ladite tête projectile est plaquée contre celui-ci par au moins un élément de retenue (10), et une deuxième position où ledit élément propulseur mécanique (8) venant en butée contre des éléments de butée (11, 12), ladite tête projectile pouvant se déplacer en translation vers ladite structure en étant guidée par des éléments de guidage (4),
- ledit dispositif comprenant de plus un système anti-rebond (6, 7) pour empêcher tout rebond de ladite tête projectile après impact sur ladite structure.

2. Dispositif selon la revendication 1, **caractérisé en ce qu'**il comprend un bâti comportant lesdits éléments de guidage (4) montés sur des embases ; lesdits éléments de guidage (4) définissant une zone libre pour le passage dudit élément d'impact (2), ledit système anti-rebond (6, 7) étant placé entre ladite zone libre et lesdits éléments de guidage (4) dans la partie inférieure dudit bâti et ledit élément propulseur mécanique (8) étant relié audit bâti dans sa partie supérieure.

3. Dispositif selon la revendication 1 ou 2, **caractérisé en ce que** lesdits éléments de guidage (4) sont des colonnes.

4. Dispositif selon l'une quelconque des revendications 1 à 3, **caractérisé en ce que** ledit élément propulseur mécanique (8) comprend au moins deux ressorts de compression, le dispositif comprenant un organe (13) pour mettre en tension lesdits ressorts.

5. Dispositif selon les revendications 3 et 4, **caractérisé en ce que** lesdits ressorts ayant une extrémité mobile le long desdits éléments de guidage (4), lesdits éléments de butée (11, 12) sont constitués par un épaulement placé sur chaque colonne (4).

6. Dispositif selon l'une quelconque des revendications 1 à 5, **caractérisé en ce que** ledit système anti-rebond (6, 7) comporte au moins deux vérins recevant en appui le corps principal (1) de ladite tête de part et d'autre de l'élément d'impact (2).

7. Dispositif selon la revendication 6, **caractérisé en ce que** lesdits vérins (6, 7) sont des vérins pneumatiques.

8. Dispositif selon l'une quelconque des revendications 1 à 7, **caractérisé en ce que** ledit élément de retenue (10) est un électro-aimant.

9. Dispositif selon l'une quelconque des revendications 1 à 8, **caractérisé en ce qu'**il comporte au moins un capteur de déplacement.

10. Dispositif selon la revendication 9, **caractérisé en ce qu'**il comporte de plus un capteur d'effort à jauges de déformation (14).

11. Dispositif selon l'une quelconque des revendications 1 à 10, **caractérisé en ce que** ledit élément d'impact (2) est monté de manière amovible sur ledit corps principal (1).

12. Dispositif selon l'une quelconque des revendications 1 à 11, **caractérisé en ce que** ledit élément d'impact (2) a une forme choisie dans le groupe comprenant une forme hémisphérique, une forme cylindrique et une forme conique.

13. Dispositif selon l'une quelconque des revendications 1 à 12, **caractérisé en ce que en ce que** la vitesse v de ladite tête projectile est inférieure ou égale à 5 m.s⁻¹.

## Patentansprüche

1. Vorrichtung zur Erzeugung von Schlägen auf eine Struktur, wobei die Vorrichtung einen Geschosskopf aufweist, **dadurch gekennzeichnet, dass**
- der Kopf einen Hauptkörper (1) aufweist, auf den ein Schlagelement (2) vorstehend montiert ist,
- die Vorrichtung ein mechanisches Antriebselement (8) enthält, um den Geschosskopf in Bewegung zu versetzen,
- wobei das mechanische Antriebselement (8) sich zwischen einer ersten so genannten Ruhestellung, in der, während das mechanische Antriebselement (8) unbeweglich ist, der Geschosskopf durch mindestens ein Halteelement (10) gegen dieses gedrückt wird, und einer zweiten Stellung verschieben kann, in der das mechanische Antriebselement (8) gegen Anschlagelemente (11, 12) in Anschlag kommt, wobei der Geschosskopf sich in Translationsrichtung zur Struktur verschieben kann, indem er von Führungselementen (4) geführt wird,
- wobei die Vorrichtung außerdem ein Anti-Rückprallsystem (6, 7) enthält, um jeden Rückprall des Geschosskopfs nach dem Schlag auf die Struktur zu verhindern.

2. Vorrichtung nach Anspruch 1, **dadurch gekennzeichnet, dass** sie ein Gestell enthält, das die Führungselemente (4) auf Sockel montiert aufweist, wobei die Führungselemente (4) eine freie Zone für den Durchgang des Schlagelements (2) definieren, wobei das Anti-Rückprallsystem (6, 7) zwischen der freien Zone und den Führungselementen (4) im unteren Teil des Gestells angeordnet und das mechanische Antriebselement (8) mit dem Gestell in seinem oberen Teil verbunden ist.

3. Vorrichtung nach Anspruch 1 oder 2, **dadurch gekennzeichnet, dass** die Führungselemente (4) Säulen sind.

4. Vorrichtung nach einem der Ansprüche 1 bis 3, **dadurch gekennzeichnet, dass** das mechanische Antriebselement (8) mindestens zwei Druckfedern enthält, wobei die Vorrichtung ein Organ (13) enthält, um die Federn zu spannen.

5. Vorrichtung nach den Ansprüchen 3 und 4, **dadurch gekennzeichnet, dass**, da die Federn ein entlang den Führungselementen (4) bewegliches Ende haben, die Anschlagelemente (11, 12) aus einer Schulter bestehen, die auf jeder Säule (4) angeordnet ist.

6. Vorrichtung nach einem der Ansprüche 1 bis 5, **dadurch gekennzeichnet, dass** das Anti-Rückprallsystem (6, 7) mindestens zwei Arbeitszylinder aufweist, die den Hauptkörper (1) des Kopfs zu beiden Seiten des Schlagelements (2) aufliegend aufnehmen.

7. Vorrichtung nach Anspruch 6, **dadurch gekennzeichnet, dass** die Arbeitszylinder (6, 7) Pneumatikzylinder sind.

8. Vorrichtung nach einem der Ansprüche 1 bis 7, **dadurch gekennzeichnet, dass** das Halteelement (10) ein Elektromagnet ist.

9. Vorrichtung nach einem der Ansprüche 1 bis 8, **dadurch gekennzeichnet, dass** sie mindestens einen Verschiebungssensor aufweist.

10. Vorrichtung nach Anspruch 9, **dadurch gekennzeichnet, dass** sie außerdem einen Kraftsensor mit Verformungsmessstreifen (14) aufweist.

11. Vorrichtung nach einem der Ansprüche 1 bis 10, **dadurch gekennzeichnet, dass** das Schlagelement (2) entfernbar auf den Hauptkörper (1) montiert ist.

12. Vorrichtung nach einem der Ansprüche 1 bis 11, **dadurch gekennzeichnet, dass** das Schlagelement (2) eine Form hat, die aus der Gruppe ausgewählt wird, die eine Halbkugelform, eine zylindrische Form und eine Kegelform enthält.

13. Vorrichtung nach einem der Ansprüche 1 bis 12, **dadurch gekennzeichnet, dass** die Geschwindigkeit v des Geschosskopfs niedriger als oder gleich 5 m.s⁻¹ ist.

## Claims

1. Device for generating impacts on a structure, the device comprising a projectile head, **characterized in that**
- the head comprises a main body (1) on which an impact element (2) is mounted so as to protrude,
- the device comprises a mechanical propulsion element (8) for moving the projectile head,
- the mechanical propulsion element (8) being capable of moving between a first position called the rest position, in which, with the mechanical propulsion element (8) being fixed in position, the projectile head is pressed against it by at least one retention element (10), and a second position, in which, with the mechanical propulsion element (8) moving into abutment against stop elements (11, 12), the projectile head being able to move in translation towards the structure being guided by guiding elements (4),
- the device further comprising an anti-rebound system (6, 7) to prevent any rebound of the projectile head after impact on the structure.

2. Device according to Claim 1, **characterized in that** it comprises a frame which comprises the guiding elements (4) mounted on bases; the guiding elements (4) defining a free zone for the passage of the impact element (2), the anti-rebound system (6, 7) being placed between the free zone and the guiding elements (4) in the lower portion of the frame and the mechanical propulsion element (8) being connected to the frame in the upper portion thereof.

3. Device according to Claim 1 or Claim 2, **characterized in that** the guiding elements (4) are columns.

4. Device according to any one of Claims 1 to 3, **characterized in that** the mechanical propulsion element (8) comprises at least two compression springs, the device comprising a member (13) for tensioning the springs.

5. Device according to Claims 3 and 4, **characterized in that**, the springs having an end which can be moved along the guiding elements (4), the stop elements (11, 12) are constituted by a shoulder which is placed on each column (4).

6. Device according to any one of Claims 1 to 5, **characterized in that** the anti-rebound system (6, 7) comprises at least two actuators which receive in abutment the main body (1) of the head at one side and the other of the impact element (2).

7. Device according to Claim 6, **characterized in that** the actuators (6, 7) are pneumatic actuators.

8. Device according to any one of Claims 1 to 7, **characterized in that** the retention element (10) is an electromagnet.

9. Device according to any one of Claims 1 to 8, **characterized in that** it comprises at least one movement sensor.

10. Device according to Claim 9, **characterized in that** it further comprises a force sensor (14) with deformation gauges.

11. Device according to any one of Claims 1 to 10, **characterized in that** the impact element (2) is removably mounted on the main body (1).

12. Device according to any one of Claims 1 to 11, **characterized in that** the impact element (2) has a shape which is selected from the group comprising a hemispherical shape, a cylindrical shape and a conical shape.

13. Device according to any one of Claims 1 to 12, **characterized in that** the speed v of the projectile head is less than or equal to 5 m.s⁻¹.
